# EUROPÄISCHE PATENTANMELDUNG

(11) **EP 3 694 171 A1**
(43) Veröffentlichungstag der Anmeldung: **12.08.2020**
(21) Anmeldenummer: 19156404.6
(22) Anmeldetag: 11.02.2019
(51) Int. Cl.: H04L 29/06

(54) **SICHERHEITSEINRICHTUNG, SICHERHEITSVORRICHTUNG, VERFAHREN ZUM ERHALT UND/ODER ZUM PRÜFEN EINES KRYPTOGRAPHISCHEN SCHUTZES, COMPUTERPROGRAMM UND COMPUTERLESBARES MEDIUM**

(71) Anmelder: Siemens Aktiengesellschaft, 80333 München (DE)
(72) Erfinder: Aschauer, Hans, 81829 München (DE); Falk, Rainer, 85586 Poing (DE); Fischer, Kai, 85598 Baldham (DE); Fries, Steffen, 85598 Baldham (DE); Heintel, Markus, 81377 München (DE); Klasen, Wolfgang, 85521 Ottobrunn (DE); Pfau, Axel, 80333 München (DE); Sperl, Franz, 92526 Oberviechtach (DE); Trummer, Georg, 92224 Amberg (DE); Zwanzger, Johannes, 85579 Neubiberg (DE)

(57) **Zusammenfassung**

Die Erfindung betrifft eine Sicherheitseinrichtung (2, 3) zum Erhalt und/oder zum Prüfen eines kryptographischen Schutzes von Datenpaketen (1) verschiedener Schichten (L2, L3), umfassend
- eine Paketteileinheit (7),
- eine Sicherheitseinheit (8),
- eine Konfigurationseinheit (11), und
- eine Zusammenbaueinheit (12),
wobei in der Sicherheitseinrichtung (2, 3) für jede der wenigstens zwei Schichten (L2, L3) Kontrolldaten (14) für die Paketteileinheit (7), die Zusammenbaueinheit (12) und insbesondere die Sicherheitseinheit (8) gespeichert sind, wobei sich die Kontrolldaten (14) für verschiedene Schichten (L2, L3) voneinander unterscheiden, und die Konfigurationseinheit (11) dazu ausgebildet und/oder eingerichtet ist, der Paketteileinheit (7), der Zusammenbaueinheit (12) und insbesondere der Sicherheitseinheit (8) vor der Verarbeitung eines empfangenen Datenpaktes (1) durch die Paketteileinheit (7), die Zusammenbaueinheit (12) und insbesondere die Sicherheitseinheit (8) diejenigen Kontrolldaten (14) zu übermitteln, die der Schicht (L2, L3) des empfangenen Datenpaketes (1) zugeordnet sind, damit die Paketteileinheit (7), die Zusammenbaueinheit (12) und insbesondere die Sicherheitseinheit (8) gemäß den Kontrolldaten (14) oder jeweils Teilen dieser konfiguriert werden. Darüber hinaus betrifft die Erfindung eine Sicherheitsvorrichtung, ein Verfahren, ein Computerprogramm und ein computerlesbares Medium.

## Beschreibung

Die Erfindung betrifft eine Sicherheitseinrichtung zum Erhalt eines kryptographischen Schutzes für Datenpakete verschiedener Schichten und/oder zum Prüfen eines kryptographischen Schutzes von Datenpaketen verschiedener Schichten. Darüber hinaus betrifft die Erfindung eine Sicherheitsvorrichtung, ein Verfahren zum Erhalt und/oder zum Prüfen eines kryptographischen Schutzes, ein Computerprogramm und ein computerlesbares Medium.

Beim Einsatz von Verfahren zum kryptographischen Schutz, etwa zur Verschlüsselung und/oder Authentifizierung von Netzwerckommunikation muss entschieden werden, auf welcher Schicht des OSI-Referenzmodells ein Sicherheitsprotokoll eingebracht wird. Abhängig von der für das Sicherheitsprotokoll gewählten Schicht entstehen dabei unterschiedliche Vor- und Nachteile. IPsec sowie TLS beispielsweise sind typische Sicherheitsprotokolle auf Layer 3 bzw. Layer 4/5.

IPsec (Internet Protocol Security) soll eine gesicherte Kommunikation über IP-Netze, wie beispielsweise das Internet, ermöglichen. IPsec ist in einer Vielzahl verschiedener RFCs (Requests for Comments) der IETF (Internet Engineering Task Force) spezifiziert. Rein beispielhaft sei auf RFC6071 und die diversen darin adressierten RFCs verwiesen.

TLS (Transport Layer Security) stellt ein hybrides Verschlüsselungsprotokoll zur sicheren Datenübertragung insbesondere im Internet dar. Beispielhaft sei im Zusammenhang mit TLS auf den RFC5246 verwiesen. Unter "hybrid" ist dabei zu verstehen, dass es das Schlüsselmanagement beinhaltet.

Als ein Beispiel für eine Layer 2 Sicherheitsprotokoll sei MACSec genannt. Zugehörige Standards sind insbesondere IEEE 802.1AE bzw. IEEE 802.1X.

Typischerweise sind die Auswirkungen eines Sicherheitsprotokolls hinsichtlich Latenz und Jitter auf niedrigeren Netzwerkschichten (Layer 1 und 2) niedriger als auf höheren Netzwerkschichten. Andererseits muss bei einer Verschlüsselung auf Layer2 auf Funktionen der höheren Netzwerkschichten verzichtet werden. So können auf Layer2 verschlüsselte IP-Pakete beispielsweise im Transportnetz nicht mehr direkt gerouted werden und müssen durch einen Tunnel-Mechanismus über höhere Layer transportiert werden.

Der Anmelderin ist bekannt, dass bisher das zu verwendende Sicherheitsprotokoll entsprechend der äußeren Anforderungen bei der Planung einer Sicherheitsarchitektur für eine Anwendung bzw. Netzwerktopologie festgelegt wird. Dies setzt voraus, dass der Planer die Anforderung vorab kennt. Es werden dann die für den jeweiligen Einsatzzweck passenden Netzwerckomponenten ausgewählt. Verfügbare Netzwerkkomponenten, bei denen es sich insbesondere um Hardware-basierte Sicherheitskomponenten handelt, sind dabei normalerweise für genau einen Einsatzzweck. So werden beispielsweise spezielle Hardware-basierte Layer2-Netzwerkverschlüsseler und alternativ spezielle Hardware-basierte Layer3-Netzwerkverschlüsseler angeboten, die auch als L2- bzw. L3-Netzwerkverschlüsseler bezeichnet werden.

Aus der ebenfalls auf die Anmelderin zurückgehenden EP 3 422 657 A1 ist eine Sicherheitseinrichtung bekannt, die ein größeres Maß an Flexibilität bietet. Diese umfasst eine Klassifikationseinheit, mit der ein Datenpaketteil, der einer kryptographischen Verarbeitung zu unterziehen ist, und auf welche Art die kryptografische Verarbeitung erfolgen soll, ermittelt werden kann. Da flexibel derjenige Teil eines Paketes bestimmt werden kann, der einer kryptographischen Verarbeitung unterzogen wird, kann beispielsweise eine Layer3-Verschlüsselung, eine Layer2-Verschlüsselung oder ein kryptographischer Schutz eines Applikationsprotokolls oder nur eines Applikationsprotokolldatenfeldes erfolgen. Die kryptographische Verarbeitung des von der Klassifikationseinheit ausgesuchten Paketteils erfolgt durch ein Sicherheitsmodul der Einrichtung. Die durch die Klassifikationseinheit bestimmte kryptographische Verarbeitung kann als Steuerparameter dem Sicherheitsmodul bereitgestellt werden.

Ausgehend von dem Stand der Technik besteht eine Aufgabe der vorliegenden Erfindung darin, eine Sicherheitseinrichtung und ein Verfahren zum Erhalt eines kryptographischen Schutzes für Datenpakete verschiedener Schichten und/oder zum Prüfen eines kryptographischen Schutzes von Datenpaketen verschiedener Schichten anzugeben, die ein besonders hohes Maß an Flexibilität bei gleichzeitig hoher Sicherheit bieten und mit denen ein vergleichsweise geringer konstruktiver Aufwand einhergeht.

Die erstgenannte Aufgabe wird gelöst durch eine Sicherheitseinrichtung zum Erhalt eines kryptographischen Schutzes für Datenpakete verschiedener Schichten und/oder zum Prüfen eines kryptographischen Schutzes von Datenpaketen verschiedener Schichten, umfassend
- eine Paketteileinheit, die dazu ausgebildet und/oder eingerichtet ist, Datenpakete in zwei oder mehr Teile aufzuteilen,
- eine Sicherheitseinheit, die dazu ausgebildet und/oder eingerichtet ist, einen oder mehrere von der Paketteileinheit empfangene Datenpaketteile kryptographisch zu schützen und/oder einen kryptographischen Schutz dieses oder dieser zu prüfen,
- eine Konfigurationseinheit, und
- eine Zusammenbaueinheit, die dazu ausgebildet und/oder eingerichtet ist, von der Paketteileinheit und/oder der Sicherheitseinheit und/oder der Konfigurationseinheit übergebene Datenpaketteile zum Erhalt eines Datenpaketes zusammenzusetzen,
wobei in der Sicherheitseinrichtung, insbesondere der Konfigurationseinheit für jede der wenigstens zwei Schichten Kontrolldaten für die Paketteileinheit, die Zusammenbaueinheit und insbesondere die Sicherheitseinheit gespeichert sind, wobei sich die Kontrolldaten für verschiedene Schichten voneinander unterscheiden, und die Konfigurationseinheit dazu ausgebildet und/oder eingerichtet ist, der Paketteileinheit, der Zusammenbaueinheit und insbesondere der Sicherheitseinheit vor der Verarbeitung eines empfangenen Datenpaktes durch die Paketteileinheit, die Zusammenbaueinheit und insbesondere die Sicherheitseinheit diejenigen Kontrolldaten oder jeweils Teile dieser zu übermitteln, die der Schicht des empfangenen Datenpaketes zugeordnet sind, damit die Paketteileinheit, die Zusammenbaueinheit und insbesondere die Sicherheitseinheit gemäß den Kontrolldaten oder jeweils Teilen dieser konfiguriert werden.

Die zweitgenannte Aufgabe wird gelöst durch ein Verfahren zum Erhalt eines kryptographischen Schutzes für Datenpakete verschiedener Schichten und/oder zum Prüfen eines kryptographischen Schutzes von Datenpaketen verschiedener Schichten, bei dem
- ein Datenpaket, das einer von wenigstens zwei möglichen Schichten zugeordnet ist, empfangen wird,
- anhand des Datenpaketes bestimmt wird, welcher Schicht dieses zugeordnet ist, und/oder insbesondere vor Empfang des Datenpaketes die Eigenschaften der Verbindungsstrecke, über welches das Datenpaket empfangen wird, untersucht werden und anhand des Ergebnisses der Untersuchung bestimmt wird, welcher Schicht über die Verbindungsstrecke ankommende Datenpakete zugeordnet sind,
- Kontrolldaten für jede der wenigstens zwei Schichten bereitgestellt und aus diesen die zu der Schicht des Datenpaketes und/oder der Schicht der Verbindungsstrecke gehörigen Kontrolldaten ausgesucht werden,
- die ausgesuchten Kontrolldaten oder jeweils Teile dieser an eine Paketteileinheit, eine Zusammenbaueinheit und insbesondere eine Sicherheitseinheit übermittelt und die Paketteileinheit, die Zusammenbaueinheit und insbesondere die Sicherheitseinheit gemäß den Kontrolldaten konfiguriert werden,
- das empfangene Datenpaket an die Paketteileinheit übergeben und von dieser in zwei oder mehr Teile aufgeteilt wird, wobei die Aufteilung gemäß der über die Kontrolldaten erhaltenen Konfiguration erfolgt,
- von der Paketteileinheit wenigstens ein Paketteil an die Sicherheitseinheit und wenigstens ein Paketteil an die Zusammenbaueinheit übergeben wird,
- die Sicherheitseinheit den wenigstens einen von der Paketteileieinheit erhaltenen Paketteil mit einem kryptographischen Schutz versieht oder einen solchen prüft, und den wenigstens einen Paketteil anschließend an die Zusammenbaueinheit übergibt,
- die Zusammenbaueinheit den wenigstens einen von der Paketteileinheit erhaltenen Datenpaketteil und den wenigstens einen von der Sicherheitseinheit erhaltenen Datenpaketteil zu einem Datenpaket zusammensetzt, wobei das Zusammensetzen gemäß der über die Kontrolldaten erhaltenen Konfiguration erfolgt.

Der Grundgedanke der vorliegenden Erfindung besteht mit anderen Worten darin, eine Sicherheitseinrichtung insbesondere in Form einer Netzwerkkomponente bereitzustellen, die es erlaubt, mit derselben Hardware einen kryptografischen Schutz für verschiedene Schichten zu realisieren, insbesondere sowohl für Layer 2 (L2) als auch Layer 3 (L3), bevorzugt gemäß dem OSI-Referenzmodell. Abhängig von dem jeweiligen Einsatzszenario kann die erfindungsgemäße Sicherheitseinrichtung entsprechend beispielsweise entweder auf der Ebene von Ethernetframes (L2) oder von IP-Paketen (L3) operieren. Dabei wird erfindungsgemäß auf dieselbe Verschlüsselungshardware zurückgegriffen. Da Kontrolldaten für mehrere Schichten in der Sicherheitseinrichtung abgelegt sind, kann flexibel, jeweils für die Schicht, welcher ein Datenpaket, das mit einem Schutz zu versehen oder von dem ein Schutz zu prüfen ist, zugeordnet ist bzw. welcher ein solches angehört, auf die passenden Kontrolldaten zugegriffen werden und diese können den Einheiten bzw. Komponenten der Einrichtung zu deren Konfiguration für eine für die jeweilige Schicht geeignete bzw. erforderliche Verarbeitung flexibel zugeführt werden.

Aufgrund der Übergabe von Kontrolldaten an die Einheiten können Datenpaket gemäß der über die Kontrolldaten erhaltenen, zu der Schicht des jeweiligen Datenpaketes gehörigen Konfiguration verarbeitet werden. Es kann sein, dass von den für eine Schicht gespeicherten Kontrolldaten verschiedene Teile an die verschiedenen Einheitenübergeben werden, und dann entsprechend jede Einheit einen Teil der für eine Schicht gespeicherten Kontrolldaten erhält.

Die Erfindung nutzt unter anderem, dass in Paketen auch unterschiedlicher Schichten, insbesondere L2- und L3-Paketen, die Länge aller führender Felder bis einschließlich zum Ethertype oftmals statisch ist. Insbesondere daher wird es möglich, die zu schützenden bzw. zu prüfenden Paketteile auch durch eine reine Hardwareimplementierung leicht auszuwählen. Je nach Layer, insbesondere L2 oder L3, betrifft das mehr oder weniger Teile des kompletten Datenpaketes. Die Payload kann auf einfache Weise durch Offsetadresse und Länge beschrieben werden, ohne dass ein zusätzlicher Zwischenspeicher benötigt wird.

Bei der Paketteileinheit kann es sich beispielsweise um einen sogenannten Parser handeln bzw. diese kann einen solchen umfassen. Durch den erfindungsgemäßen Einsatz einer Paketteileinheit, die dazu ausgebildet und/oder eingerichtet ist, empfangene Datenpakete aufzuteilen, wird es insbesondere möglich, einen oder mehrere vorgegebene Teile eines Paketes direkt an die Zusammenbaueinheit weiterzugeben und andere Teile an die Sicherheitseinheit zu übermitteln, damit (nur) diese mit einem kryptografischen Schutz versehen werden oder damit (nur) von diesen ein kryptografischer Schutz geprüft werden kann bzw. wird. Darunter, dass ein Datenpaket von der Paketteileinheit aufgeteilt wird, ist auch zu verstehen, dass einer oder mehrere Paketteile bzw. die entsprechenden Daten aus diesem entnommen werden, insbesondere, um separat von dem Rest des Paketes weiterverwendet bzw. weiterverarbeitet werden zu können.

Die Begriffe "kryptographisch schützen" bzw. "kryptographisch geschützt" bzw. "kryptographischer Schutz" beziehen sich insbesondere auf die Sicherheit, Vertraulichkeit und/oder Integrität von Daten und deren Übertragung sowie auf die Sicherheit, Vertraulichkeit und/oder Integrität beim Zugriff auf Daten. Auch die Authentifizierung insbesondere bei der Datenübertragung bzw. beim Datenzugriff gehört zu den bzw. fällt unter die Begriffe "kryptographisch schützen" bzw. "kryptographisch geschützt" bzw. "kryptographischer Schutz". Die Sicherheitseinheit ist zweckmäßiger Weise eingerichtet, um wenigstens eine kryptographische Funktionalität zu erbringen, ggf. gemäß einer durch übergeben Kontrolldaten erhaltenen Konfiguration. Unter einer kryptographischen Funktionalität wird beispielsweise eine Funktion zur Verschlüsselung und/oder Entschlüsselung, zum Schutz der Vertraulichkeit, zum Integritätsschutz und/oder zur Authentifikation von Daten verstanden. Zum kryptografischen Schutz von Daten können insbesondere folgende Funktionalitäten jeweils in Alleinstellung oder Kombination erfolgen:
- Verschlüsselung
- Entschlüsselung
- Authentifizierung
- Schlüsselspeicherung
- Berechnung einer kryptografischen Prüfsumme
- Prüfen einer kryptografischen Prüfsumme
- Schlüsselvereinbarung
- Schlüsselerzeugung
- Erzeugung von Zufallszahlen
- Lizenzierung
- Unterstützung von systemischen Überwachungsfunktionen
- Überwachen oder Überwachung von Daten
- Validierung von Daten
- Filterung von Daten

Unter einem Prüfen eines kryptographischen Schutzes eines Datenpaketes ist insbesondere eine Entschlüsselung und/oder eine Integritätsprüfung und/oder ein Authentizitätsprüfung zu verstehen. Auch das Entfernen eines Schutzes stellt eine Möglichkeit des Prüfens eines solchen dar.

Für die Verschlüsselung von Paketteilen von Paketen verschiedener Schichten kommt bevorzugt ein an IPsec ESP angelehntes Format zum Einsatz.

Insbesondere welcher Teil von Datenpaketen direkt an die Zusammenabbaueinheit weiterzugeben ist und welcher Teil der Sicherheitseinheit zwecks Vorsehens oder Prüfens eines kryptographischen Schutzes zuzuführen ist, kann für verschiedene Schichten variieren. Durch die erfindungsgemäße automatische Übermittlung der der jeweiligen Schicht zugeordneten Kontrolldaten an die Paketteileinheit wird es möglich, diese flexibel für die jeweilige Schicht zu konfigurieren. So kann eine Paketteileinheit, und somit die gleiche Hardware für Datenpakete verschiedene Schichten, insbesondere sowohl für Layer 2-Datenpakete als auch Layer 3-Datenpakete verwendet werden.

Gleiches gilt für die Zusammenbaueinheit. Auch die Art, wie erhaltene Teile von Datenpaketen wieder zusammenzusetzen sind, um ein zusammenhängendes Datenpaket zu erhalten, variiert in Abhängigkeit der Schicht der Datenpakete. Da erfindungsgemäß auch die Zusammenbaueinheit flexibel mit den der jeweiligen Schicht zugeordneten Konfigurationsdaten versorgt wird, gilt auch hier, dass die gleiche Hardware für den Zusammenbau verschiedene Schichten verwendet werden kann.

Es kann vorgesehen sein, dass im Anschluss an einen Zusammenbau durch die Zusammenbaueinheit eine Layer3-Tunnelung und/oder eine NAT-Traversal-Tunnelung erfolgen. Auch kann ein anschließendes Layer2-Framing vorgesehen sein.

Auch der Sicherheitseinheit können von den gespeicherten Kontrolldaten die jeweils schichtspezifischen Kontrolldaten übermittelt werden, um diese für eine der mehreren Schichten zu konfigurieren.

Zweckmäßigerweise ist die Paketteileinheit und/oder die Zusammenbaueinheit und/oder die Sicherheitseinheit eingerichtet, um die Kontrolldaten auszuwerten und um gemäß diesen konfiguriert zu werden.

Bei der Paketteileinheit und/oder der Zusammenbaueinheit und/oder der Sicherheitseinheit handelt es sich weiterhin bevorzugt um Einheiten, die jeweils eine Hardwarekomponente umfassen oder auf einer solchen ausgebildet bzw. implementiert sind.

In bevorzugter Ausführungsform umfasst die Sicherheitseinheit zumindest einen Teil eines FPGAs (Feldprogrammierbares Gate Array) oder wird durch zumindest einen Teil eines FPGAs gebildet. Sie ist bevorzugt rein Hardware-implementiert.

Die Sicherheitseinheit kann einen Schlüsselspeicher und/oder eine Recheneinheit umfassen. Aus dem Schlüsselspeicher können geeignete Schlüssel ausgewählt werden. Eine Recheneinheit kann insbesondere eine kryptographische Kernfunktion übernehmen, etwa ein Ver- bzw. Entschlüsseln von Datenpaketteilen insbesondere unter Verwendung von Schlüsseln aus einem Schlüsselspeicher abwickeln. Es sei angemerkt, dass ein Schlüsselspeicher Teil einer Sicherheitseinheit sein kann, jedoch nicht sein muss, vielmehr prinzipiell auch separat zu einer solchen vorgesehen sein kann. Weiterhin kann vorgesehen sein, dass für den Fall, dass eine Sicherheitseinheit einen Schlüsselspeicher umfasst, dieser ausgestaltet und/oder eingerichtet ist, um Kontrolldaten bzw. einen Teil dieser zu empfangen und diese zu verarbeiten bzw. auszuwerten und/oder um gemäß dieser konfiguriert zu werden.

Es kann vorgesehen sein, dass eine Recheneinheit der Sicherheitseinheit konfiguriert wird, indem dieser zu verwendendes Schlüsselmaterial oder eine Referenz auf solches übergeben wird. Schlüsselmaterial ist typischerweise Link-spezifisch, d.h., einer Verbindung zwischen zwei Endpunkten zugewiesen. Der Link kann auch anhand von Datenpaketteilen, etwa Metadaten ausgewählt werden. Diese können, müssen jedoch nicht Schicht-spezifisch sein.

In weiterer bevorzugter Ausgestaltung umfasst die Konfigurationseinheit wenigstens einen inhaltsadressierbaren Speicher (CAM), insbesondere einen ternär inhaltsadressierbaren Speicher (TCAM).

Die Paketteileinheit und/oder die Zusammenbaueinheit können beispielsweise auf einer Hardware, etwa einem Netzwerkprozessor, und/oder auf einer integrierten Schaltung, etwa einem ASIC (Anwendungsspezifische integrierte Schaltung) implementiert sein bzw. zumindest Teile eines solchen umfassen oder dadurch gebildet sein. Auch ist es möglich, dass insbesondere die Paketteileinheit und/oder die Zusammenbaueinheit auf einem Universalprozessor (auch als General Purpose Prozessor bezeichnet) implementiert sind bzw. zumindest Teile eines solchen umfassen, bevorzugt in Kombination mit geeigneten Software- bzw. Programmkomponenten.

Da gemäß der Erfindung die gleiche Hardware für unterschiedliche Schichten zum Einsatz kommen kann, zeichnet sich die erfindungsgemäße Sicherheitseinrichtung durch einen besonders kompakten und konstruktiv vergleichsweise einfachen Aufbau aus, obwohl sie gleichzeitig mehrere Einsatzgebiete abdecken kann. Da erfindungsgemäß Kontrolldaten für verschiedene Schichten in dieser gespeichert sind, die für den jeweiligen Anwendungsfall automatisiert ausgewählt werden, insbesondere in Abhängigkeit der ankommenden Datenpakete und/oder in Abhängigkeit der Eigenschaften der Verbindungsstrecke, über welches diese ankommen, ist ein Eingriff durch einen Benutzer zur Anpassung der Konfiguration an die jeweilige Schicht nicht erforderlich. Diese kann vielmehr völlig automatisch ablaufen, ohne dass es einer manuellen Umkonfiguration bedarf. Auch wird es durch die Erfindung beispielsweise möglich, bei der Vernetzung mehrerer Sites mit unterschiedlichen Anforderungen insbesondere bezüglich L2/L3 die Menge der benötigten Netzwerkkomponenten zu reduzieren. In einem Projekt kann beispielsweise zunächst ein L3 Link zwischen den Sites projektiert werden und falls sich später die Anforderungen ändern, beispielsweise zwischen den Sites auch echtzeitkritische Daten ausgetauscht werden müssen, kann auf L2 umgestellt werden. Die bereits installierte und konfigurierte Hardware braucht nicht getauscht werden.

Die Entscheidung, entsprechend welcher Schicht ankommende Netzwerkdaten behandelt werden oder zu behandeln sind, kann insbesondere durch eine Klassifikation der Daten anhand von Regeln festgelegt werden. Dazu kann die erfindungsgemäße Sicherheitseinrichtung die eingehenden Netzwerkdaten analysieren und die jeweils entsprechenden Kontrolldaten, die von der Verschlüsselungshardware auswertet werden, um die Netzwerkdaten passend mit einem kryptografischen Schutz zu versehen bzw. einen solchen zu prüfen, auswählen und den Einheiten zuführen.

Die Ermittlung, welcher Schicht Datenpakete zugeordnet sind, etwa, ob es sich um einen L2- oder ein L3-Paket handelt, kann auf besonders vorteilhafte Weise anhand von Teilen der Datenpakete erfolgen.

Als besonders geeignet hat es sich erwiesen, wenn wenigstens ein Paketteil, insbesondere eine Adresse und/oder Protokoll-Metadaten, bevorzugt durch geeignete Maskierung direkt aus Headerdaten von kryptographisch zu verarbeitenden Paketen entnommen und auf Basis dieser ermittelt wird, welcher Schicht sie zugeordnet sind bzw. entstammen und/oder auf Basis dieser passende Kontrolldaten ausgewählt werden. Rein beispielhaft für geeignete Datenpaketteile zur Bestimmung der zugehörigen Schicht und/oder Auswahl von Kontrolldaten seieninsbesondere, wenn es sich bei den Paketen um (noch) ungeschützte Pakete handelt, die mit einem Schutz zu versehen sind - genannt eine (Ziel- und/oder Quell-)Adresse, insbesondere (Destination und/oder Source) MAC, ein VLAN tag, ein Ethertype, führende Bits der Payload eines Datenpaket, was im Falle beispielsweise von L3-Paketen einer IP-Adresse entsprechend kann bzw. entspricht. Insbesondere in demjenigen Falle, dass Pakete eingehen, die einen kryptografischen Schutz aufweisen, der zu prüfen ist, hat es sich als besonders geeignet erwiesen, auf Teile eines Headers, insbesondere ESP-Headers abzustellen, um die zugehörige Schicht zu bestimmen und/oder um die passenden Kontrolldaten auszusuchen.

Es kann eine Klassifikationseinheit vorgesehen sein, die dazu ausgebildet und/oder eingerichtet sein kann, Datenpakete, die jeweils einer von wenigstens zwei Schichten, insbesondere gemäß dem OSI-Referenzmodell zugeordnet sind, zu empfangen. Sie kann alternativ oder zusätzlich dazu ausgebildet und/oder eingerichtet sein, um aus einem empfangenen Datenpaket jeweils einen Datenpaketteil insbesondere durch Maskierung zu ermitteln und diesen der Konfigurationseinheit zu übergeben oder mitzuteilen. Dies hat sich als besonders geeignete Möglichkeit erwiesen, die für die Schichtbestimmung bzw. die Auswahl geeigneter/passender Kontrolldaten verwendbaren Paketteile der Konfigurationseinheit zur Verfügung zu stellen.

Die Klassifikationseinheit kann in bevorzugter Ausgestaltung wenigstens einen inhaltsadressierbaren Speicher (CAM), insbesondere einen ternär inhaltsadressierbaren Speicher (TCAM) umfassen.

Eine weitere Ausführungsform zeichnet sich dadurch aus, dass in der Sicherheitseinrichtung, insbesondere der Konfigurationseinheit ein Klassifizierungsdatensatz gespeichert ist, in dem oder über den verschiedenen Datenpaketteilen, insbesondere Adressen und/oder Protokoll-Metadaten, oder davon ableitbaren Werten bzw. Größen jeweils eine von wenigstens zwei Schichten, insbesondere entweder dem Layer 2 oder Layer 3 gemäß OSI-Referenzmodell zugeordnet ist. Alternativ oder zusätzlich können in dem oder über den Klassifizierungsdatensatz verschiedenen Datenpaketteilen jeweils die Kontrolldaten für eine der wenigstens zwei Schichten oder eine Verknüpfung zu einem Speicherort dieser zugeordnet sein. Gemäß diesen vorteilhaften Ausführungsformen stehen die Kontrolldaten für die mehreren Schichten in Form eines Klassifizierungsdatensatzes bzw. eines Teiles eines solchen zur Verfügung, was sich als besonders geeignet erwiesen hat. Über den Klassifizierungsdatensatz kann insbesondere ein Mapping von Datenpaketteilen zu einer jeweils zugehörigen Schicht bzw. direkt den jeweils zugehörigen Kontrolldaten erfolgen. Die Zuordnung von passenden Kontrolldaten zu Datenpaketteilen bzw. davon ableitbaren Werten/Größen kann auch dadurch gegeben sein, dass verschiedenen Datenpaketteilen bzw. davon ableitbaren Werten/Größen jeweils ein Verweis bzw. ein Link zu einem Speicherort zugeordnet ist, an dem dann die Kontrolldaten für die entsprechende Schicht liegen.

Derjenige oder diejenigen Datenpaketteile, die für die Schichtbestimmung und/oder Kontrolldaten-Auswahl betrachtet bzw. herangezogen werden, können auch direkt für eine Adressierung eines Konfigurationsspeichers, in dem ein Klassifizierungsdatensatz abgelegt sein kann, verwendet werden.

In weiterer Ausgestaltung kann vorgesehen sein, dass die Konfigurationseinheit dazu ausgebildet und/oder eingerichtet ist, anhand eines erhaltenen Datenpaketteils die Kontrolldaten für diejenige Schicht, die gemäß dem Klassifizierungsdatensatz zu dem Datenpaketteil gehört, auszuwählen und diese an die Paketeileinheit, die Zusammenbaueinheit und insbesondere die Sicherheitseinheit zu übergeben. Beispielsweise kann in dem Klassifizierungsdatensatz nach einem von der Klassifizierungseinheit übergebenen Datenpaketteil oder auch einem davon abgeleiteten Wert oder einem davon abgeleiteten Parameter gesucht werden und, wenn dieser gefunden wird, die diesem zugeordnete Schicht und/oder die zugeordneten Kontrolldaten gewählt und an die entsprechenden Einheiten übergeben werden.

Beispielsweise kann vorgesehen sein, dass im Anschluss an den Empfang eines Datenpaketes eine Klassifikation von Netzwerkdaten anhand von Protokoll-Metadaten bzw. Protokollheadern erfolgt. Dabei wird bevorzugt aus dem jeweiligen Paket eine Lookup-Adresse extrahiert. Insbesondere in einem Konfigurationsspeicher können dann über eine Lookup-Adresse die benötigten Kontrolldaten nachgeschlagen werden und die Bearbeitungseinheiten, insbesondere die Paketteileinheit, die Zusammenbaueinheit und gegebenenfalls die Sicherheitseinheit, können anhand der schichtspezifischen bzw. schichtzugehörigen Kontrolldaten automatisch konfiguriert werden.

Dann kann ein Aufteilen des empfangenen Paketes durch die Paketteileinheit entsprechend der eingestellten Konfiguration erfolgen. Dieser Schritt ist insbesondere wesentlich für die Sicherheit und Zuverlässigkeit. Einerseits sollten alle schutzwürdigen Daten über die Sicherheitseinheit geschickt werden, die eine kryptografische Verarbeitungsfunktion übernimmt, diese beispielsweise verschlüsselt (oder in umgekehrter Richtung entschlüsselt). Daneben kann es besonders zweckmäßig sein ausgewählte Datenpaketteile, insbesondere Protokollmetadaten direkt weiterzuleiten.

In vorteilhafter Weiterbildung kann die Sicherheitseinrichtung ferner derart ausgebildet und/oder eingerichtet sein, dass wenigstens ein Datenpaketteil eines empfangenen Datenpaketes, der bevorzugt Metadaten umfasst oder durch solche gebildet wird, mit Whitelist-Daten abgeglichen wird. Dann kann die Sicherheitseinrichtung weiterhin derart ausgebildet und/oder eingerichtet sein, dass der Abgleich in der Paketteileinheit oder der Konfigurationseinheit erfolgt und/oder derart, dass für den Fall, dass der Abgleich positiv ausfällt, der wenigstens eine Datenpaketteil an die Zusammenbaueinheit weitergeleitet wird, dies bevorzugt an der Sicherheitseinheit vorbei. Die Whitelist-Daten können in der Konfigurationseinheit, etwa einem Konfigurationsspeicher dieser abgelegt sein. Diese können Teil auch Teil der Kontrolldaten sein, die an die Paketteileinheit für eine schichtspezifische Konfiguration übergeben werden.

In bevorzugter Ausgestaltung gibt die Paketteileinheit ausschließlich verifizierte bzw. mit Whitelist-Daten abgeglichene Daten, insbesondere verifizierte bzw. mit Whitelist-Daten abgeglichene Metadaten empfangener Datenpakete jeweils direkt an die Zusammenbaueinheit und/oder die Konfigurationseinheit, insbesondere einen Konfigurationsspeicher dieser weiter. Weiterhin kann vorgesehen sein, dass die Paketteileinheit eine Payload bzw. einen Nutzdateninhalt gegebenenfalls zusammen mit zusätzlichen authentisierten Daten (additional authenticated data, AAD) an die Sicherheitseinheit übermittelt. Bei AAD handelt es sich in der Regel um Daten, die authentifiziert, jedoch nicht verschlüsselt sind. Es kann sich insbesondere um AAD im Sinne von NIST SP800-38d handeln.

Dass ein Austausch verifizierter bzw. mit Whitelist-Daten abgeglichener Daten über die Konfigurationseinheit, insbesondere einen Konfigurationsspeicher dieser erfolgt, ist vor allem dann sinnvoll, wenn diese Daten für verschiedene Datenpaketteile, insbesondere Lookup-Adressen jeweils statisch sind. Die für den Schritt des Zusammenbaus benötigten Metadaten können dann als statische Konfigurationsdaten aus einer Lookup-Tabelle übergeben werden. Damit gelangen dann keinerlei Daten von innen direkt nach außen. Diese Varianten realisiert ein restriktives Whitelisting. Der Abgleich mit Whitelist-Daten kann in der Konfigurationseinheit oder auch der Paketteileinheit erfolgen. Letztere bekommt diese dann zweckmäßiger Weise übergeben, etwa als Teil der Kontrolldaten. Bei dem wenigstens einen Datenpaketteil handelt es sich insbesondere um verifizierte Daten, die nicht mit einem kryptographischen Schutz zu versehen bzw. von denen kein kryptographischer Schutz zu prüfen ist.

Für den oder die Paketteile, die an die Sicherheitseinheit übergeben werden, kann eine kryptografische Bearbeitung beispielsweise eine Verschlüsselung und/oder ein Erzeugen eines Authentizitätsmerkmals der zu schützenden Daten (insbesondere AAD und Payload) erfolgen.

Für den Erhalt bzw. die Prüfung eines kryptographischen Schutzes kann auf an sich vorbekannte Mechanismen zurückgegriffen werden. Etwa kann AES, insbesondere AES GCM zum Einsatz kommen. AES steht dabei für Advanced Encryption Standard und GCM für den Galois Counter Mode.

Abschließend kann der Zusammenbau der Ausgabennetzwerkdaten durch die Zusammenbaueinheit erfolgen, was erfindungsgemäß wiederrum entsprechend der über die Kontrolldaten eingestellten Konfiguration geschieht.

Alternativ oder zusätzlich dazu, dass auf Teile empfangener Pakete für eine Klassifizierung abgestellt wird, können auch die Eigenschaften einer Verbindungsstrecke betrachtet bzw. herangezogen werden.

Eine weitere Ausführungsform der erfindungsgemäßen Einrichtung zeichnet sich daher dadurch aus, dass die Sicherheitseinrichtung dazu ausgebildet und/oder eingerichtet ist, zu ermitteln, durch welche Eigenschaften sich eine Verbindungsstrecke, über welche Datenpakete an der Sicherheitseinrichtung, insbesondere einer Klassifikationseinheit dieser ankommen, auszeichnet, und die Konfigurationseinheit dazu ausgebildet und/oder eingerichtet ist, in Abhängigkeit der ermittelten Eigenschaften der Verbindungsstrecke aus den Kontrolldaten passende Kontrolldaten auszusuchen und diese der Paketteileinheit, der Zusammenbaueinheit und insbesondere der Sicherheitseinheit zu übermitteln. Die Sicherheitseinrichtung kann dann ferner dazu eingerichtet sein, die Eigenschaften der Verbindungsstrecke zu ermitteln, indem sie wenigstens ein Datenpaket, das einer vorgegebenen Schicht zugeordnet ist, an eine vorgegebene Adresse sendet und überwacht, ob ein charakteristisches Antwortpaket empfangen wird. Die Eigenschaften einer Verbindungsstrecke können gemäß dieser Ausgestaltung durch ein geeignetes Probing ermittelt werden, was sich als besonders geeignete, auf einfache Weise und automatisiert durchführbare Möglichkeit erwiesen hat.

In Weiterbildung des erfindungsgemäßen Verfahrens kann entsprechend vorgesehen sein, dass vor Empfang des Datenpaketes die Eigenschaften der Verbindungsstrecke, über welches das Datenpaket empfangen wird, untersucht werden, indem wenigstens ein Datenpaket, das einer vorgegeben Schicht zugeordnet ist, an eine vorgegebene Adresse gesendet und überwacht wird, ob ein charakteristisches Antwortpaket empfangen wird.

Die Eigenschaften einer Verbindungsstrecke können mit anderen Worten durch ein geeignetes Probing ermittelt werden. Dabei kann etwa derart vorgegangen werden, dass in einem ersten Schritt die Next-Hop MAC-Adresse eines Kommunikationspartners, insbesondere einer weiteren Sicherheitseinrichtung etwa über ARP ermittelt wird. ARP steht dabei für das Address Resolution Protocol, welches beispielsweise in RFC826 behandelt ist. Im Anschluss daran kann ein Paket einer vorgegebenen Schicht, beispielsweise ein L2-Paket an die auf diese Weise erhaltene MAC-Adresse gesendet werden. Falls das L2-Paket den Kommunikationspartner erreicht (d.h., es ist ein L2-Netz, ansonsten wird das Paket am ersten Router verworfen) beantwortet dieser das Paket mit einem charakteristischem Response-, also Antwortpaket. Wird dieses Antwort-Paket von der Sicherheitseinrichtung, welche die Eigenschaften der Verbindungsstrecke prüft, wieder empfangen, kann geschlussfolgert werden, dass es sich um ein L2-Netz handelt bzw. der Verbindungsstrecke die Layer2 Schicht zugeordnet ist. Für den Fall, dass auf das Senden eines Paketes einer Schicht kein Antwort-Paket erhalten wird, kann ein Paket einer anderen Schicht gesendet und geprüft werden, ob hierauf eine Antwort erfolgt.

Eine automatisierte Konfiguration des Link-Types (Verarbeitung insbesondere auf L2 oder L3) unter Berücksichtigung der Verbindungsstrecke insbesondere zwischen zwei erfindungsgemäßen Sicherheitseinrichtungen, die beispielsweise durch Sicherheits-Gateways gegeben sein bzw. solche darstellen können, kann auf die beschriebene Weise erzielt werden. Abhängig von den Eigenschaften der Verbindungsstrecke kann dann eine Bearbeitung auf dem jeweils vorteilhafteren Layer, also der jeweils vorteilhafteren Schicht erfolgen. Wird beispielsweise eine reine L2-Strecke zu einem Kommunikationspartner erkannt, wird automatisch die günstigere Bearbeitung auf L2 gewählt.

Was die Kontrolldaten angeht, die erfindungsgemäß für verschiedene Schichten gespeichert sind und den Einheiten zu deren schichtspezifischer Konfiguration zugeführt werden, können diese verschiedenen Informationen, Daten, Angaben und/oder Befehle umfassen.

Beispielsweise kann vorgesehen sein, dass die Kontrolldaten für wenigstens eine Schicht Informationen zur Berechnung einer Offset-Adresse einer Payload eines Datenpaketes und/oder Daten zur Erzeugung eines Headers, insbesondere eines ESP Headers und/oder Steuerungsdaten zur Schaltung von Datenpfaden in der jeweiligen Einheit, insbesondere multiplexer Adressen, und/oder Daten betreffend eine Schlüsselauswahl umfassen. Die Daten zur Erzeugung eines ESP Headers können beispielsweise der Identifikation eines Links bzw. einer Sicherheitsbeziehung dienen. Multiplexe Adressen beispielsweise dem passenden Routing von ESP Header und ESP Tail insbesondere für additional authenticated data (AAD).

Die Kontrolldaten für die jeweilige Schicht sind bevorzugt derart, dass durch diese die Paketteileinheit, die Zusammenbaueinheit und insbesondere die Sicherheitseinheit derart konfiguriert werden kann oder konfiguriert wird, dass eine an die jeweilige Schicht angepasste Verarbeitung des Datenpaketes oder Teilen dieses durch die jeweilige Einheit möglich wird. Die Verarbeitung kann unter anderem an die zu dieser Schicht gehörige bzw. durch diese Schicht bedingte Struktur des Datenpaketes angepasst sein.

Es kann beispielsweise möglich sein, dass die Kontrolldaten für eine der wenigstens zwei Schichten derart sind, dass sie die Paketteileinheit dazu veranlassen, der Sicherheitseinheit einen Nutzdatenteil mit einer davorstehenden Typenangabe als Klartext zu übergeben und die Kontrolldaten für eine weitere der wenigstens zwei Schichten derart sind, dass sie die Paketteileinheit dazu veranlassen, der Sicherheitseinheit einen Nutzdatenteil ohne eine davorstehende Typenangabe als Klartext zu übergeben.

Alternativ oder zusätzlich kann vorsehen sein, dass die Kontrolldaten für eine der wenigstens zwei Schichten derart sind, dass sie die Paketteileinheit und/oder die Sicherheitseinheit dazu veranlassen, einem Datenpaketteil einen (ESP) Header und einen (ESP) Tail insbesondere als zusätzliche Authentifizierungsdaten voranzustellen, und die Kontrolldaten für eine weitere der wenigstens zwei Schichten derart sind, dass sie die Paketteileinheit und/oder die Sicherheitseinheit dazu veranlassen, einem Datenpaketteil insbesondere nur einen (ESP) Header bevorzugt als zusätzliche authentifizierte Daten voranzustellen.

Diese Ausführungsformen haben sich vor allem für denjenigen Fall als besonders geeignet erwiesen, dass eine erfindungsgemäße Sicherheitseinrichtung für eine kryptographische Verarbeitung von Layer2- und Layer3-Paketen, insbesondere gemäß dem OSI-Referenzmodell verwendet werden bzw. geeignet sein soll. Bevorzugt wird für den Fall von Layer2 dem Nutzdatenteil nur ein Header, insbesondere ein ESP-Header vorangestellt und für den Fall von Layer3 sowohl ein (ESP) Header als auch ein (ESP) Tail. Ein Nutzdatenanteil mit einer vorstehenden Typenangabe, insbesondere einem Ethertype, wird bevorzugt für den Fall von Layer2 übergeben und eine Nutzdatenanteil ohne eine solche Typenangabe, insbesondere ohne einen Ethertype, für den Fall von Layer3. Es sei angemerkt, dass insbesondere bei Layer3-Paketen der Nutzdatenteil selbst am Anfang einen IP-Header IPH aufweisen kann bzw. in der Regel aufweist. Dieser wird dann bevorzugt zusammen mit der diesem folgenden Payload als Nutzdatenteil an die Sicherheitseinheit übergeben.

Eine weitere bevorzugte Ausführungsform des erfindungsgemäßen Verfahrens zeichnet sich ferner dadurch aus, dass die Konfigurationseinheit einen Konfigurationsspeicher, in dem die Kontrolldaten abgelegt sind, umfasst oder durch einen solchen gebildet wird oder mit einem solchen verbunden ist, wobei der Konfigurationsspeicher bevorzugt einen inhaltsadressierbaren Speicher (CAM) umfasst oder durch einen solchen gebildet wird.

Auch kann vorgesehen sein, dass die Klassifikationseinheit einen inhaltsadressierbaren Speicher (CAM), insbesondere einen ternär inhaltsadressierbaren Speicher (TCAM) umfasst.

Inhaltsadressierbare Speicher haben sich als besonders geeignet erwiesen, um einen möglichst schnellen Zugriff etwa während der Klassifikation zu ermöglichen. Die Adresse für einen CAM-Zugriff kann durch geeignete Maskierungen direkt aus den Headerdaten zu schützender ausgehender Netzwerkdatenpakete oder eingehender Netzwerkdatenpakete, von denen ein Schutz zu prüfen ist, erfolgen. Eine direkte Adressierung eines Konfigurationsspeichers hat sich dabei als besonders geeignet erwiesen.

Ein weiterer Gegenstand der vorliegenden Erfindung ist eine Sicherheitsvorrichtung zum Erhalt eines kryptografischen Schutzes für Datenpakete und zur Prüfung eines kryptografischen Schutzes von Datenpaketen. Diese umfasst bevorzugt zwei erfindungsgemäße Sicherheitseinrichtungen, wobei von diesen eine zum Erhalt eines kryptografischen Schutzes für Datenpakete und die andere zur Prüfung eines kryptografischen Schutzes von Datenpaketen ausgebildet und/oder eingerichtet ist.

Eine erfindungsgemäße Sicherheitsvorrichtung kann in vorteilhafter Ausgestaltung wenigstens einen FPGA und/oder wenigstens einen integrierten Schaltkreis (IC), insbesondere ASIC, umfassen. Dabei ist es möglich, dass auf einem FPGA oder IC, insbesondere ASIC, die Sicherheitseinheiten beider Sicherheitseinrichtungen - bevorzugt jeweils auf verschiedenen Bereichen des FPGAs bzw. ICs - implementiert sind, wobei dann wiederum eine Sicherheitseinheit für das Vorsehen eines kryptographischen Schutzes und die andere Sicherheitseinheit für das Prüfen eines solchen ausgebildet und/oder eingerichtet ist.

Es kann sein, dass jede Sicherheitseinrichtung einer erfindungsgemäßen Vorrichtung eine eigene Klassifizierungseinheit, eine eigenen Paketteileinheit, eine eigene Sicherheitseinheit, eine eigene Zusammenbaueinheit und eine eigene Konfigurationseinheit aufweist. Alternativ können sich die beiden Einrichtungen auch wenigstens eine dieser Einheiten teilen. Dies hat sich insbesondere für die Konfigurationseinheit als geeignet erwiesen, ganz besonders wenn diese einen Konfigurationsspeicher umfasst, in dem dann die Kontrolldaten für verschiedene Schichten für beide Einheiten, also sowohl für den Fall, dass ankommende Datenpakete mit einem kryptographischen Schutz zu versehen sind, als auch für den Fall, dass ein solcher zu prüfen ist, abgelegt sind und ausgewählt werden können sind.

Bei einer erfindungsgemäßen Sicherheitsvorrichtung kann es sich insbesondere um ein Sicherheitsgateway handeln, mittels dem beide Richtungen - also sowohl das Vorsehen als auch das Prüfen eines Schutzes - realisiert werden können.

Sicherheitsgateways kommen bevorzugt in aus dem Stand der Technik an sich bekannter Weise paarweise zum Einsatz, können beispielsweise an den beiden Enden eines an sich nicht sicheren bzw. nicht vertrauenswürdigen Übertragungsweges angeordnet sein. Durch die Übertragung in geschützter Form zwischen dem Paar von Sicherheitsgateway kann dann eine sichere Datenkommunikation auch über die an sich nicht vertrauenswürdige oder sichere Verbindung erfolgen.

Eine erfindungsgemäße Sicherheitseinrichtung bzw. eine erfindungsgemäße Sicherheitsvorrichtung kann auch einen Teil einer Steuerung, etwa für eine industrielle, technische Anlage bilden bzw. mit einer Steuerung verbindbar oder verbunden sein. Dann können mit der erfindungsgemäßen Sicherheitseinrichtung bzw. -vorrichtung beispielsweise Steuerdaten, welche von der Steuerung insbesondere an Aktoren zu senden sind, geschützt, etwa verschlüsselt werden, und/oder Messdaten, welche insbesondere von Sensoren an die Steuerung zu senden sind, von einem Schutz befreit, insbesondere entschlüsselt werden. So wird eine besonders sichere Steuerung einer industriellen Anlage möglich. Da ein Schutz der Daten erhalten wird, können auch externe bzw. an sich nicht vertrauenswürdige Übertragungswege, wie das Internet, genutzt werden. Da die Erfindung es ermöglicht, dass Pakete verschiedener Schichten verarbeitet werden besteht dabei ein besonders hohes Maß an Flexibilität.

Ein weiterer Gegenstand der Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin zeigt jeweils in rein schematischer Darstellung
- FIG 1: ein Ausführungsbeispiel einer erfindungsgemäßen Vorrichtung;
- FIG 2: ein Blockbild, welches die Einheiten der erfindungsgemäßen Vorrichtung aus FIG 1 zusammen mit zugehörigen Abläufen zeigt;
- FIG 3: die Verarbeitung eines L2-Paketes zum Erhalt eines kryptographischen Schutzes mit der erfindungsgemäßen Vorrichtung aus FIG 1;
- FIG 4: die Verarbeitung eines L3-Paketes zum Erhalt eines kryptographischen Schutzes mit der erfindungsgemäßen Vorrichtung aus FIG 1; und
- FIG 5: die Schritte eines Ausführungsbeispiels des erfindungsgemäßen Verfahrens.

In den Figuren sind gleiche Komponenten bzw. Elemente mit gleichen Bezugszeichen versehen.

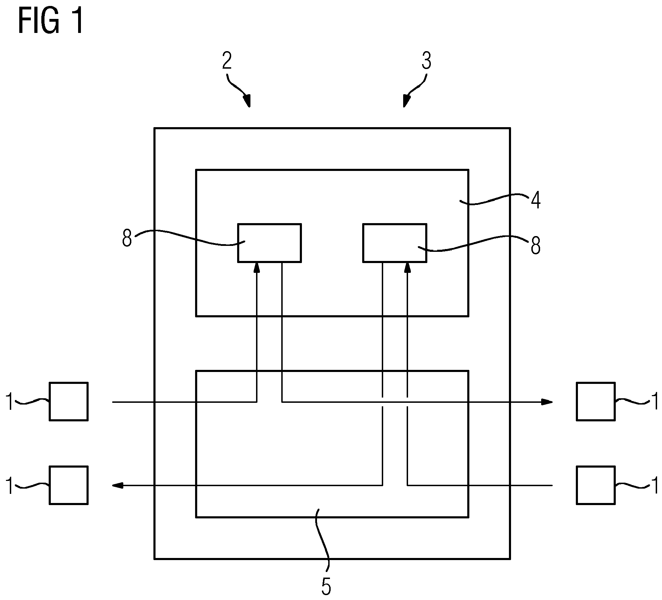

Die FIG 1 zeigt in rein schematischer, stark vereinfachter Darstellung ein Ausführungsbeispiel einer erfindungsgemäßen Sicherheitsvorrichtung zum Erhalt eines kryptographischen Schutzes für Datenpakete 1 verschiedener Schichten und zum Prüfen eines kryptographischen Schutzes von Datenpaketen 1 verschiedener Schichten.

Bei dem hier beschriebenen Ausführungsbeispiel ist die Vorrichtung als Sicherheitsgateway ausgebildet. Sicherheitsgateways kommen in der Regel in aus dem Stand der Technik hinlänglich bekannter Weise paarweise zum Einsatz, können beispielsweise an den beiden Enden eines an sich nicht sicheren bzw. nicht vertrauenswürdigen Übertragungsweges angeordnet sein und zwei (sichere) Teilnetze über diesen Verbindungsweg miteinander abgesichert verbinden. Durch die Übertragung in geschützter, insbesondere verschlüsselter Form über die nicht vertrauenswürdige Verbindungsstrecke kann eine sichere Datenkommunikation über diese erzielt werden. Jedes Gateway des Paares muss dann einerseits Datenpakete, die über die nicht vertrauenswürdige Verbindungsstrecke in geschützter, insbesondere verschlüsselter und/oder authentifizierter Form ankommen, entsprechend des Schutzes behandeln (entschlüsseln und/oder prüfen der Authentizität und/oder Integrität der empfangenen Daten) können, sowie Datenpakete, die aus dem sicheren Teilnetz stammen und über die Verbindungstrecke zu senden sind, mit einem Schutz versehen (Verschlüsseln der Datenpakete bzw. Teilen dieser und/oder Integritätsschutz).

Die erfindungsgemäße Vorrichtung gemäß FIG 1 umfasst zu diesen Zwecken zwei Sicherheitseinrichtungen 2, 3 von denen jede ein Ausführungsbeispiel einer erfindungsgemäßen Sicherheitseinrichtung darstellt. Dabei ist eine Sicherheitseinrichtung 2 zum Erhalt eines kryptographischen Schutzes für Datenpakete 1 und die andere 3 zum Prüfen eines kryptographischen Schutzes von Datenpaketen 1 ausgebildet und eingerichtet.

Die Vorrichtung umfasst ein feldprogrammierbares Gate Array, FPGA, 4 sowie eine separate Hardware in Form eines Netzwerkprozessors 5. Es sei angemerkt, dass anstelle des Netzwerkprozessors 5 auch ein ASIC oder eine Universalprozessor, insbesondere eine CPU in Kombination mit geeigneten Softwarekomponenten vorgesehen sein könnten.

Jede der beiden Sicherheitseinrichtungen 2, 3 umfasst jeweils eine Klassifikationseinheit 6, die dazu ausgebildet und eingerichtet ist, Datenpakete 1, die entweder dem Layer2 oder dem Layer 3 gemäß dem OSI-Referenzmodell zugeordnet sind, zu empfangen, eine Paketteileinheit 7, die dazu ausgebildet und eingerichtet ist, von der Klassifikationseinheit 6 empfangene Datenpakete 1 in zwei oder mehr Teile aufzuteilen, eine Sicherheitseinheit 8, die dazu ausgebildet und/oder eingerichtet ist, einen oder mehrere von der Paketteileinheit 7 empfangene Datenpaketteile, vorliegend zusätzliche authentifizierte Daten (AAD) 9 und eine Payload (PL) 10 kryptographisch zu schützen oder von einem oder mehreren von der Paketteileinheit 7 empfangenen Datenpaketteilen 9, 10 einen kryptografischen Schutz zu prüfen. Die Sicherheitseinheiten 8 umfassen jeweils eine Recheneinheit 8a, welche dem eigentlichen Vorsehen bzw. Prüfen des kryptographischen Schutzes dient, insbesondere eine Ver- bzw. Entschlüsselungsmaschine darstellt, und einen Schlüsselspeicher 8b, in welchem Schlüssel abgelegt sind, auf welche hierzu zugegriffen werden kann.

Die Sicherheitseinheiten 8 sind auf dem FPGA 4 der Vorrichtung implementiert, jeweils auf unterschiedlichen Bereichen dieses. Selbstverständlich ist auch nicht ausgeschlossen, dass alternativ zu dem dargestellten Beispiel zwei FPGAs 4 vorgesehen sind, und auf jedem FPGA 4 eine Sicherheitseinheit 8 implementiert ist.

Die Vorrichtung umfasst weiterhin eine gemeinsame Konfigurationseinheit 11, die einen Teil jeder der beiden Sicherheitseinrichtungen 2, 3 bildet.

Darüber hinaus weist jede der beiden Einrichtungen 2, 3 jeweils eine Zusammenbaueinheit 12 auf, die dazu ausgebildet und eingerichtet ist, von der Paketteileinheit 7 und der Sicherheitseinheit 8 übergebene Datenpaketteile AT, 10, 13 zum Erhalt eines Datenpaketes 1 zusammenzusetzen.

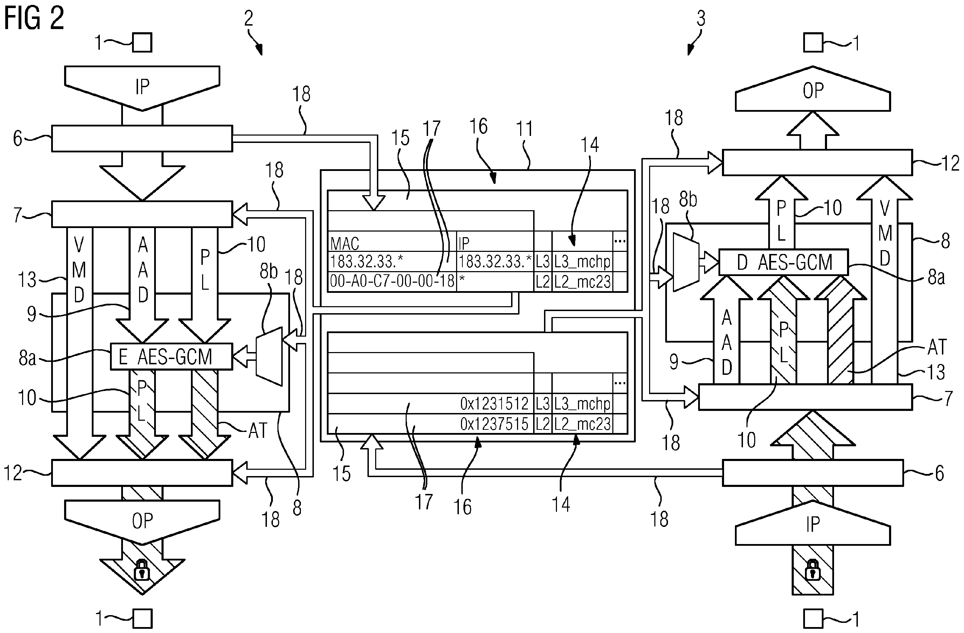

Es sei angemerkt, dass in der stark vereinfachten FIG 1 nur die auf dem FPGA 4 implementierten Sicherheitseinheiten 8 zu erkennen sind. Die Klassifizierungseinheiten 6, die Paketteileinheiten 7 und die Zusammenbaueinheiten 12, die auf der separaten Hardware in Form eines Netzwerkprozessors 5 implementiert sind, sind in der FIG 1 nicht dargestellt. Diese können der FIG 2 entnommen werden.

In der Konfigurationseinheit 11 sind für den Layer2 und den Layer3 Kontrolldaten 14 für die Paketteileinheit 7, die Zusammenbaueinheit 12 und die Sicherheitseinheit 8 gespeichert, wobei sich die Kontrolldaten 14 für die beiden verschiedene Schichten L2, L3 voneinander unterscheiden. Bei dem hier beschriebenen Ausführungsbeispiel umfasst die Konfigurationseinheit 11 einen Konfigurationsspeicher 15, in dem die Kontrolldaten 14 gespeichert sind. Dabei sind Kontrolldaten 14 sowohl für mit einem kryptographischen Schutz zu versehende Datenpakete 1 (siehe FIG 2 Mitte, oben) als auch für Datenpakete 1, von denen ein solcher zu prüfen ist (siehe FIG 2 Mitte, unten), vorgesehen.

Die gemeinsame Konfigurationseinheit 11 ist dazu ausgebildet und eingerichtet, den Paketteileinheiten 7 und den Zusammenbaueinheiten 12 und den Sicherheitseinheiten 8, konkret deren Schlüsselspeichern 8b vor der Verarbeitung eines empfangenen Datenpaktes 1 durch diese Einheiten bzw. Komponenten 7, 8b, 12 diejenigen Kontrolldaten 14 zu übermitteln, die der Schicht des empfangenen Datenpaketes 1 zugeordnet sind, damit diese Einheiten gemäß den Kontrolldaten 14 oder jeweils Teilen dieser konfiguriert werden, und das Datenpaket 1 gemäß der über die Kontrolldaten 14 erhaltenen, zu der Schicht des Datenpaketes gehörigen Konfiguration verarbeitet werden kann. Für die Auswahl ist eine geeignete Matching-Logik in Form einer geeigneten Matching-Programmkomponente vorhanden.

Vorliegend ist in der gemeinsamen Konfigurationseinheit 11 für jede Einrichtung 2, 3 jeweils ein Klassifizierungsdatensatz 16 gespeichert, in dem verschiedenen Datenpaketteilen 17, vorliegend Adressen, jeweils eine von wenigstens zwei Schichten L2, L3 und jeweils die Kontrolldaten 14 für eine der zwei Schichten L2, L3 oder eine Verknüpfung zu einem Speicherort dieser zugeordnet sind. In die FIG 2 ist der Inhalt des jeweiligen Klassifizierungsdatensatzes - rein schematisch und beispielhaft - als Tabelle mit mehreren Spalten angedeutet, wobei oben (Ausgangsregeln bzw. Regeln für das Vorsehen eines Schutzes, insbesondere die Verschlüsselung) in den vier dargestellten Spalten von links nach rechts MAC-Adresse, IP-Adresse, Link-Type (L2 oder L3) und Link ID aufgeführt sind, und unten (Eingangsregeln bzw. Regeln für das Prüfen eines Schutzes) von links nach rechts eine Security Association gefolgt von Link Type und der Link ID gezeigt sind.

Die Klassifikationseinheit 6 ist dazu ausgebildet und eingerichtet, aus einem empfangenen Datenpaket 1 einen Datenpaketteil insbesondere durch Maskierung zu ermitteln und diesen der Konfigurationseinheit 11 zu übergeben oder mitzuteilen. In der FIG 2 ist dies jeweils durch einen von der Klassifikationseinheit 6 zu der Konfigurationseinheit 11 zeigenden Pfeil 18 angedeutet. Die Klassifikationseinheit 6 umfasst einen ternären inhaltsadressierbaren Speicher (abgekürzt TCAM).

Die Konfigurationseinheit 11 ist dazu ausgebildet und eingerichtet, anhand des Datenpaketteils, vorliegend einer Lookup-Adresse 17, die Kontrolldaten 14 für diejenige Schicht L2, L3, die gemäß dem Klassifizierungsdatensatz 16 zu dem Datenpaketteil gehört, auszuwählen und an die Paketteileinheit 7 und die Zusammenbaueinheit 12 zu übergeben. In der FIG 2 ist dies durch Pfeile 18, die von der Konfigurationseinheit 11 zu diesen Einheiten 7, 12 zeigen, angedeutet.

Die Paketteileinheiten 7, die Zusammenbaueinheiten 12 und die Sicherheitseinheiten 8, konkret deren Schlüsselspeicher 8b sind ausgebildet und eingerichtet, um die Kontrolldaten 14 auszuwerten, um gemäß diesen konfiguriert zu werden.

Die Kontrolldaten 14 für die Schichten L2, L3 umfassen vorliegend Informationen zur Berechnung einer Offsetadresse einer Payload eines Datenpaketes 1 und/oder Daten zur Erzeugung eines Headers, insbesondere eines ESP Headers und/oder Steuerungsdaten zur Schaltung von Datenpfaden in der jeweiligen Einheit, insbesondere Multiplexeradressen, und/oder Daten betreffend eine Schlüsselauswahl.

Die Kontrolldaten 14 für die jeweilige Schicht L2, L3 sind ferner derart, dass durch diese die (jeweilige) Paketteileinheit 7, die (jeweilige) Zusammenbaueinheit 12 und der Schlüsselspeicher 8b der (jeweiligen) Sicherheitseinheit 8 derart konfiguriert wird, dass eine an die jeweilige Schicht L2, L3 angepasste Verarbeitung des Datenpaketes 1 oder Teilen 9, 10, 13 dieses durch die jeweilige Einheit 7, 8, 12 möglich wird. Die Kontrolldaten 14 umfassen vorliegend eine Link-ID, über welche eine Schlüsselauswahl aus in dem Schlüsselspeicher 8b vorhandenen Schlüsseln erfolgen kann bzw. erfolgt.

Die Kontrolldaten 14 für Layer2 bzw. Teile dieser sind vorliegend derart, dass sie die Paketteileinheit 7 dazu veranlassen, der Sicherheitseinheit 8 einen Nutzdatenteil PL mit einer davorstehenden Typenangabe ET als Klartext PT zu übergeben und die Kontrolldaten 14 für den Layer 3 sind derart, dass sie die Paketteileinheit 7 dazu veranlassen, der Sicherheitseinheit 8 einen Nutzdatenteil PL ohne eine davorstehende Typenangabe ET als Klartext PT zu übergeben.

Die Kontrolldaten 14 für Layer2 bzw. Teile dieser sind ferner derart, dass sie die Paketteileinheit 7 dazu veranlassen, einem Datenpaketteil nur einen Header ESPH als zusätzliche authentifizierte Daten AAD 9 voranzustellen. Die Kontrolldaten 14 für Layer3 sind ferner derart, dass sie die Paketteileinheit 7 dazu veranlassen, einem Datenpaketteil einen ESP Header ESPH und einen ESP Tail ESPT als zusätzliche authentifizierte Daten AAD 9 voranzustellen.

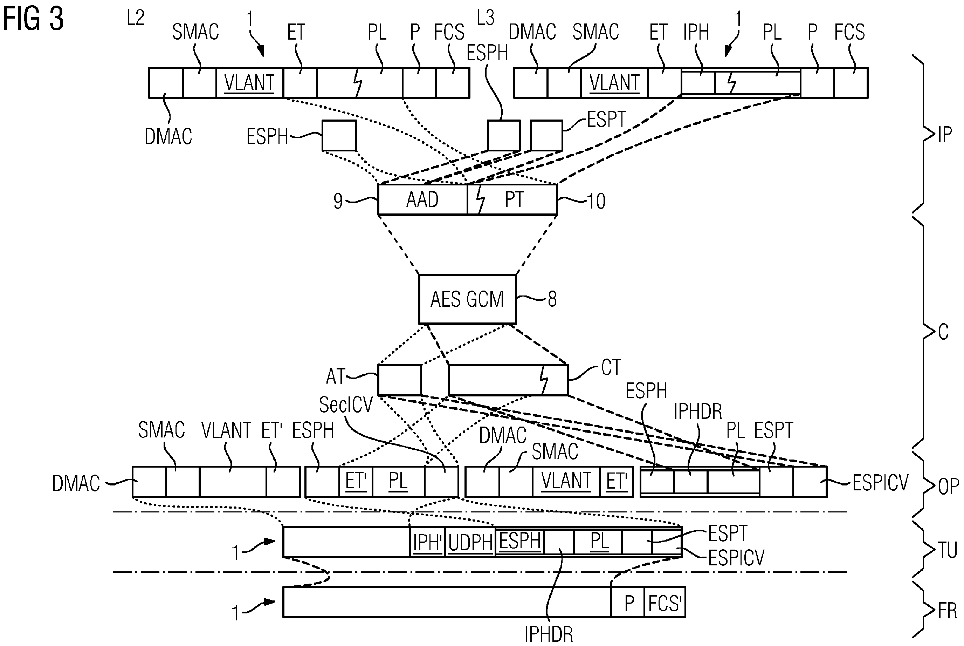

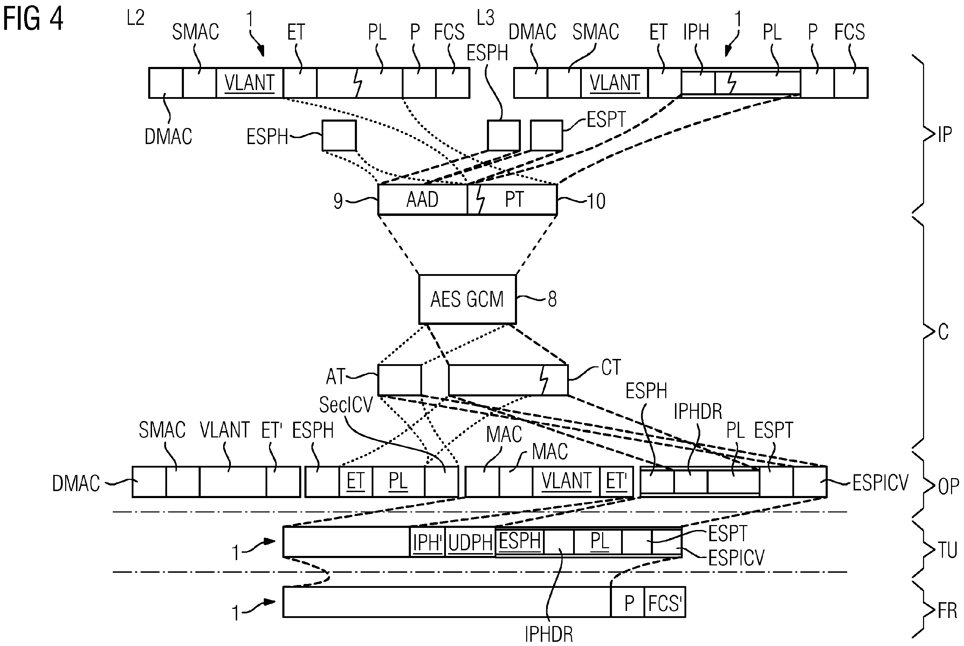

Die zugehörigen Abläufe sind in den FIG 3 und 4 dargestellt, auf die im Folgenden näher eingegangen wird.

Unter Verwendung des Ausführungsbeispiels einer erfindungsgemäßen Vorrichtung gemäß FIG 1 kann ein Ausführungsbeispiel des erfindungsgemäßen Verfahrens durchgeführt werden, welches dem Erhalt eines kryptographischen Schutzes für ein Datenpakte 1, konkret einer Verschlüsselung und Authentifizierung dieses dient. Dieses umfasst die folgenden Schritte, die unter Bezugnahme auf die FIG 2 bis 5 erläutert werden.

Es sei angemerkt, dass die FIG 3 den Vorgang eines Vorsehens eines kryptographischen Schutzes für ein L2-Datenpaket 1 und die FIG 4 für ein L3-Datenpaket 1 schematisch veranschaulicht. Der Unterschied der FIG 3 und 4 besteht darin, dass unten in der FIG 3 eine optionale L3-Tunnellung und NAT-Traversal-Tunnelung für ein L2-Paket 1 und unten in FIG 4 für ein L3-Paket 1 gezeigt sind. Das sich anschließende L2-Framing ist wieder für beide Pakete 1 gleich.

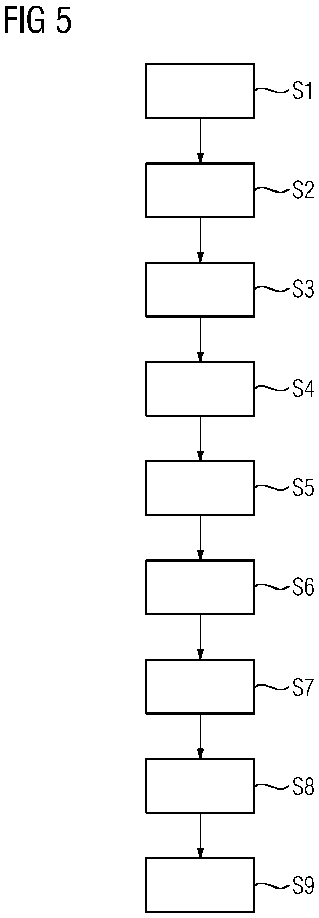

Im Rahmen des hier beschriebenen Ausführungsbeispiels des erfindungsgemäßen Verfahrens zum Erhalt eines kryptographischen Schutzes wird zunächst ein Datenpaket 1, welches einer von zwei möglichen Schichten L2, L3 zugeordneten ist, vorliegend ein L2-Datenpaket 1, von der Vorrichtung, konkret der Klassifizierungseinheit 6 der Einrichtung 2 empfangen (Schritt Sl, siehe FIG 5).

Bei dem L2-Datenpaket 1 handelt es sich vorliegend um ein Ethernet-Paket. Dieses umfasst in an sich bekannter Weise eine Destination MAC-Adresse DMAC, eine Source MAC-Adresse SMAC, ein IEEE 802.1Q VLAN Tag VLANT, eine Payload PL, ein Pad P und eine Blockprüfzeichenfolge FCS (englisch frame check sequence). Diese Struktur ist in den FIG 3 und 4 jeweils oben links dargestellt. Ein IP-, also L3-Paket unterscheidet sich von dem L2-Paket dadurch, dass es einen IP Header IPHDR am Anfang des Nutzdatenbereiches bzw. der Payload PL aufweist (siehe die FIG 3 und 4 oben rechts).

Im Anschluss an den Empfang des L2-Paketes 1 erfolgt eine Klassifikation mittels der Klassifikationseinheit 6 anhand von Protokoll-Metadaten bzw. Protokollheadern aus dem Datenpaket 1 (Schritt S2). Dabei wird anhand des Datenpaketes 1 bestimmt, welcher Schicht dieses zugeordnet ist. Dafür wird eine Lookup-Adresse 17 aus dem Datenpaket 1 extrahiert und der Konfigurationseinheit 11 übergeben.

In dem Konfigurationsspeicher 15 werden die Kontrolldaten 14 für die beiden Schichten L2, L3 bereitgestellt und über die Lookup-Adresse 17 werden die benötigten Kontrolldaten 14 für die Schicht L2 nachgeschlagen, also die zu der Schicht L2 des Paketes 1 gehörigen Kontrolldaten 14 ausgesucht (Schritt S3) und die Kontrolldaten 14 bzw. jeweils Teile dieser werden der Bearbeitungseinheiten, konkret der Paketteileinheit 7, der Zusammenbaueinheit 12 und dem Schlüsselspeicher 8b der Sicherheitseinheit 8 übergeben (Schritt S4). In der FIG 2 ist dies durch von der Konfigurationseinheit 11, konkret dem oberen Klassifizierungsdatensatz 16 zu der jeweiligen Einheit 7, 12 bzw. dem Schlüsselspeicher 8b der Sicherheitseinheit 8 zeigenden Pfeil 18 angedeutet.

Anhand der schichtspezifischen bzw. schichtzugehörigen Kontrolldaten 14 werden die Einheiten 7 und 12 automatisch konfiguriert (Schritt S5). Der Schlüsselspeicher 8b bekommt ferner eine Link-ID für eine Schlüsselwahl übergeben.

Dann wird das empfangene Paket 1 an die Paketteileinheit 7 übergeben (Schritt S6) und es erfolgt ein Aufteilen des empfangenen L2-Paketes 1 durch die Paketteileinheit 7 entsprechend der für Layer2 eingestellten Konfiguration (Schritt S7). Dieser Schritt ist insbesondere wesentlich für die Sicherheit und Zuverlässigkeit. Einerseits sollten alle schutzwürdigen Daten über die Sicherheitseinheit 8 geschickt werden. Daneben kann es besonders zweckmäßig sein, ausgewählte Datenpaketteile 13, insbesondere Protokollmetadaten, direkt weiterzuleiten, also ohne beispielsweise Ver- oder Entschlüsselung an die Zusammenbaueinheit 12 weiterzuleiten.

Vorliegend gibt die Paketteileinheit 7 ausschließlich verifizierte Daten, insbesondere verifizierte Metadaten (VMD) 13 direkt an die Zusammenbaueinheit 7 weiter und eine Payload 10 bzw. einen Nutzdateninhalt zusammen mit zusätzlichen authentisierten Daten (AAD) 9 an die Sicherheitseinheit 8 (Schritt S8). Die zusätzlichen authentifizierten Daten AAD 9 sind bei dem dargestellten Ausführungsbeispiel, wie in den FIG 3 und 4 erkennbar, durch einen ESP Header ESPH gegeben bzw. umfassen einen solchen. Der ESP Header ESPH wird der Payload 10 von der Paketteileinheit 7 als AAD 9 vorangestellt.

Für den Fall, dass anstelle eines L2-Paketes ein L3-Paket zu verarbeiten ist, werden sowohl ein ESP Header ESPH als auch ein ESP Tail ESPT der Payload (PL) 10 als AAD 9 vorangestellt, wie es ebenfalls in den FIG 3 und 4 (rechts) dargestellt ist. Eine entsprechende Konfiguration würde durch die dann ausgesuchten, zum Layer3 gehörigen Kontrolldaten 14 vorgenommen.

Optional kann vorgesehen sein, dass der (jeweiligen) Paketteileinheit 7 als der Kontrolldaten 14 Whitelist-Daten von der Konfigurationseinheit 11 übergeben werden und die Metadaten 13 von der Paketteileinheit 7 mit den Whitelist-Daten abgeglichen werden und nur für den Fall, dass der Abgleich positiv ausfällt, die Metadaten 13 an die Zusammenbaueinheit 12 weitergeleitet werden, dies an der Sicherheitseinheit 8 vorbei. Die Whitelist-Daten können in der Konfigurationseinheit, etwa einem Konfigurationsspeicher dieser abgelegt sein.

Weiterhin sei angemerkt, dass alternativ zu dem hier beschriebenen Ausführungsbeispiel vorgesehen sein kann, dass ein Austausch von Metadaten 13 über den Konfigurationsspeicher 15 der Konfigurationseinheit 11 erfolgt. Dann werden einer oder mehrere Teile eines Datenpaktes 1 von der Paketteileinheit 7 nicht direkt an die Zusammenbaueinheit 12 weitergegeben, sondern über den Konfigurationsspeicher 15, also über die Konfigurationseinheit 11 an die Zusammenbaueinheit 12. Die ist vor allem dann sinnvoll, wenn diese Daten für verschiedene Datenpaketteile, insbesondere Lookup-Adressen jeweils statisch sind. Die für den Schritt des Zusammenbaus benötigten Metadaten 13 können dann als statische Konfigurationsdaten aus einer Lookup-Tabelle übergeben werden. Damit gelangen dann keinerlei Daten von innen direkt nach außen. Diese Varianten realisiert ein restriktives Whitelisting.

Vorliegend erfolgt für die Paketteile 9, 10 des L2-Paketes 1, die an die Sicherheitseinheit 8 übergeben werden (siehe FIG 2 bis 4), eine kryptografische Bearbeitung konkret eine Verschlüsselung und ein Erzeugen eines Authentizitätsmerkmals der zu schützenden Daten (insbesondere AAD 9 und Payload 10), dies entsprechend der über die Kontrolldaten 14 eingestellten Konfiguration für Layer2 (Schritt S9). Dabei werden Schlüssel verwendet, die gemäß der an den Schlüsselspeicher 8b übergebenen Link-ID gewählt wurden. Die Recheneinheit 8a selbst kann schichtunabhängig arbeiten. Gegebenenfalls können aber auch leichte Anpassungen nötig sein, um exakte Übereinstimmung mit existierenden Standards für die jeweilige Schicht L2, L3 zu erreichen (beispielsweise IPsec oder MACsec), beispielsweise das Padding der Eingabedaten. Dann kann auch die Recheneinheit 8a durch entsprechende Kontrolldaten 14 bzw. Teile dieser entsprechend konfiguriert werden.

Für den Erhalt des kryptographischen Schutzes kann auf an sich vorbekannte Mechanismen zurückgegriffen werden. Etwa kann AES GCM zum Einsatz kommen, was vorliegend der Fall ist.

Abschließend erfolgt der Zusammenbau der Ausgabennetzwerkdaten, konkret der Paketteile 13 und der durch die Verschlüsselung erhaltenen verschlüsselten Payload 10 und des Authentifizierungs-Tags AT durch die Zusammenbaueinheit 12, was wiederrum entsprechend der über die Kontrolldaten 14 für L2 eingestellten Konfiguration geschieht (Schritt S10).

Konkret wird, wie in der FIG 3 gezeigt, der neue L2- Frame, also das neue L2-Datenpaket durch Aneinanderreihung von DMAC, SMAC, VLAN T, ET', ESPH, CT und SecICV gebildet. CT umfasst dabei das Chiffrat der Ausgangsdaten ET (das heißt der ursprüngliche ET, der ungleich des neuen ET' sein kann) und PL. DMAC, SMAC und VLANT werden als verifizierte Metadaten vom ursprünglichen Frame übernommen. Der SecICV transportiert den von AES GCM ausgegebenen Authentifizierungs-Tag AT.

Soll ein L2-Frame 1 über ein L3 Übertragungsnetz geschickt werden, können optional abhängig von der eingestellten Konfiguration zwischen ET' und ESPH zusätzlich ein IP Header IPH' (L2TP) und ein UDP Header UDPH (NAT Tunneling) eingefügt werden. Das in FIG 3 gezeigte L2 Format lehnt sich an ESP an. Durch geeignete Ausbildung und Konfiguration der Zusammenbaueinheit 12 kann erreicht werden, dass die Ausgabenetzwerkdaten ein anderes Format aufweisen, insbesondere MACsec.

FIG 4 zeigt den Zusammenbau entsprechend der über die Kontrolldaten 14 für L3 eingestellten Konfiguration. Zur Bildung eines L3-Frames 1 ist ein IP Header IPH' notwendig. Ein UDP Header UDPH kann für NAT Tunneling abhängig von der eingestellten Konfiguraiton eingefügt werden.

Zuletzt wird in beiden Darstellungen der Frame 1 auf die minimal mögliche Länge erweitert (Pad) und die Frame Check Sequence FCS' neu gebildet.

Es sei angemerkt, dass in der FIG 2 die schraffierten Pfeile darstellen, dass sich das Paket 1 bzw. die Paketteile 10 in einem geschützten, insbesondere verschlüsselten Zustand befinden und die korrespondierenden Pfeile ohne Schraffur, dass ein ungeschützter, insbesondere unverschlüsselter Zustand vorliegt.

Weiterhin sei angemerkt, dass in den FIG 3 und 4 rechts am Rand Bearbeitungsbereiche bzw. -abschnitte durch Klammern zusammengefasst bzw. markiert sind. Dabei steht IP für den Input, C für die kryptographisch Be- bzw. Verarbeitung, OP für den Output, TU für die optionale L3-Tunnelung und NAT-Traversal-Tunnelung und FR für das L2-Framing.

In der FIG 2 steht ebenfalls IP für Input und OP für Output.

Für den Fall, dass ein kryptographischer Schutz von einem L2-Paket 1 oder einem L3-Paket 1 geprüft, insbesondere das Paket bzw. Teile dieses entschlüsselt und/oder einer Integritätsprüfung und/oder einer Authentizitätsprüfung unterzogen werden soll(en) (siehe FIG 2 rechts), werden im Wesentlichen die gleichen Schritte durchgeführt, wie vorstehend für das Vorsehen eines Schutzes (FIG 2 links) beschrieben wurden.

Dabei werden Kontrolldaten 14 für den eingehenden Datenverkehr an die Paketteileinheit 7, die Sicherheitseinheit 8 und die Zusammenbaueinheit 12 übergeben.

Dabei gilt einerseits natürlich, dass in Schritt S9 kein kryptographischer Schutz durch die Sicherheitseinheit 8 vorgesehen, sondern ein solcher durch diese geprüft wird, wiederum gemäß der durch die übergebenen Kontrolldaten 14 erhaltenen Konfiguration.

Weiterhin gilt, dass im Gegensatz zur Bearbeitung ausgehender Daten in Schritt S6 kein Risiko dadurch besteht, dass versehentlich Daten nicht über die Sicherheitseinheit 8 geschickt werden. Jedoch sollte in diesem Falle insbesondere die Paketteileinheit 7 robust gegenüber möglicherweise korrupten Daten aus dem äußeren, nicht vertrauenswürdigen Netz sein. Da nur einfache Verarbeitungsschritte wie Maskierung und Lookup notwendig sind, besteht jedoch nur ein geringes Risiko, dass es einem Angreifer gelingt, gezielt Fehler zu provozieren. Analog zu ausgehenden Daten werden auch hier eventuell direkt nach innen (auf den sicheren Netzteil) weitergeleitete Metadaten sorgfältig geprüft.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Sicherheitseinrichtung (2,3) zum Erhalt eines kryptographischen Schutzes für Datenpakete (1) verschiedener Schichten und/oder zum Prüfen eines kryptographischen Schutzes von Datenpaketen (1) verschiedener Schichten (L2, L3), umfassend
- eine Paketteileinheit (7), die dazu ausgebildet und/oder eingerichtet ist, Datenpakete (1) in zwei oder mehr Teile (9, 10, 13) aufzuteilen,
- eine Sicherheitseinheit (8), die dazu ausgebildet und/oder eingerichtet ist, einen oder mehrere von der Paketteileinheit (7) empfangene Datenpaketteile (9, 10) kryptographisch zu schützen und/oder einen kryptographischen Schutz dieses oder dieser zu prüfen,
- eine Konfigurationseinheit (11), und
- eine Zusammenbaueinheit (12), die dazu ausgebildet und/oder eingerichtet ist, von der Paketteileinheit (7) und/oder der Sicherheitseinheit (8) und/oder der Konfigurationseinheit (11) übergebene Datenpaketteile (9, 10, 13) zum Erhalt eines Datenpaketes (1) zusammenzusetzen,
wobei in der Sicherheitseinrichtung (2, 3), insbesondere der Konfigurationseinheit (11) für jede der wenigstens zwei Schichten (L2, L3) Kontrolldaten für die Paketteileinheit (7), die Zusammenbaueinheit (12) und insbesondere die Sicherheitseinheit (8) gespeichert sind, wobei sich die Kontrolldaten (14) für verschiedene Schichten (L2, L3) voneinander unterscheiden, und die Konfigurationseinheit (11) dazu ausgebildet und/oder eingerichtet ist, der Paketteileinheit (7), der Zusammenbaueinheit (12) und insbesondere der Sicherheitseinheit (8) vor der Verarbeitung eines empfangenen Datenpaktes (1) durch die Paketteileinheit (7), die Zusammenbaueinheit (12) und insbesondere die Sicherheitseinheit (8) diejenigen Kontrolldaten (14) oder jeweils Teile dieser zu übermitteln, die der Schicht (L2, L3) des empfangenen Datenpaketes (1) zugeordnet sind, damit die Paketteileinheit (7), die Zusammenbaueinheit (12) und insbesondere die Sicherheitseinheit (8) gemäß den Kontrolldaten (14) oder jeweils Teilen dieser konfiguriert werden.

2. Sicherheitseinrichtung (2, 3) nach Anspruch 1, **dadurch gekennzeichnet, dass** in der Sicherheitseinrichtung (2, 3), insbesondere der in der Konfigurationseinheit (1) ein Klassifizierungsdatensatz (16) gespeichert ist, in dem verschiedenen Datenpaketteilen, insbesondere Adressen (17) und/oder Protokoll-Metadaten, oder davon ableitbaren Werten jeweils eine von wenigstens zwei Schichten (L2, L3), insbesondere entweder der Layer2 oder Layer3 gemäß OSI-Referenzmodell zugeordnet ist, und/oder jeweils die Kontrolldaten (14) für eine der wenigstens zwei Schichten (L2, L3) oder eine Verknüpfung zu einem Speicherort dieser zugeordnet sind.

3. Sicherheitseinrichtung (2, 3) nach Anspruch 1 oder 2, **dadurch gekennzeichnet, dass** eine Klassifikationseinheit (6) vorgesehen ist, die dazu ausgebildet und/oder eingerichtet ist, aus einem Datenpaket (1) jeweils einen Datenpaketteil (17) insbesondere durch Maskierung zu ermitteln und diesen der Konfigurationseinheit (11) zu übergeben oder mitzuteilen, wobei die Klassifikationseinheit (6) bevorzugt wenigstens einen inhaltsadressierbaren Speicher, insbesondere einen ternär inhaltsadressierbaren Speicher umfasst.

4. Sicherheitseinrichtung (2, 3) nach Anspruch 3, **dadurch gekennzeichnet, dass** die Konfigurationseinheit (11) dazu ausgebildet und/oder eingerichtet ist, anhand des Datenpaketteils (17) die Kontrolldaten (14) für diejenige Schicht (L2, L3), die gemäß dem Klassifizierungsdatensatz (16) zu dem Datenpaketteil (17) gehört, auszuwählen und an die Paketteileinheit (7), die Zusammenbaueinheit (12) und insbesondere die Sicherheitseinheit (8) zu übergeben.

5. Sicherheitseinrichtung (2, 3) nach einem der vorhergehenden Ansprüche, **dadurch gekennzeichnet, dass** die Sicherheitseinrichtung (2, 3) dazu ausgebildet und/oder eingerichtet ist, zu ermitteln, durch welche Eigenschaften sich eine Verbindungsstrecke, über welche Datenpakete (1) an der Sicherheitseinrichtung (2, 3), ankommen, auszeichnet, und die Konfigurationseinheit (11) dazu ausgebildet und/oder eingerichtet ist, in Abhängigkeit der ermittelten Eigenschaften der Verbindungsstrecke aus den Kontrolldaten (14) passende Kontrolldaten (14) auszusuchen und diese der Paketteileinheit (7), der Zusammenbaueinheit (12) und insbesondere der Sicherheitseinheit (8) zu übermitteln.

6. Sicherheitseinrichtung (2, 3) nach Anspruch 5, **dadurch gekennzeichnet, dass** die Sicherheitseinrichtung (2, 3) dazu ausgebildet und/oder eingerichtet ist, die Eigenschaften der Verbindungsstrecke zu ermitteln, indem sie wenigstens ein Datenpaket (1), das einer vorgegeben Schicht (L2, L3) zugeordnet ist, an eine vorgegebene Adresse sendet und überwacht, ob ein charakteristisches Antwortpaket empfangen wird.

7. Sicherheitseinrichtung (2, 3) nach einem der vorhergehenden Ansprüche, **dadurch gekennzeichnet, dass** die Sicherheitseinrichtung (2, 3) derart ausgebildet und/oder eingerichtet ist, dass wenigstens ein Datenpaketteil (13) eines empfangenen Datenpaketes (1), der bevorzugt Metadaten umfasst oder durch solche gebildet wird, mit Whitelist-Daten abgeglichen wird, wobei bevorzugt die Sicherheitseinrichtung (2, 3) derart ausgebildet und/oder eingerichtet ist, dass der Abgleich in der Paketteileinheit (6) oder der Konfigurationseinheit (11) erfolgt und/oder derart, dass für den Fall, dass der Abgleich positiv ausfällt, der wenigstens eine Datenpaketteil (13) an die Zusammenbaueinheit (12) weitergeleitet wird.

8. Sicherheitseinrichtung (2, 3) nach einem der vorhergehenden Ansprüche, **dadurch gekennzeichnet, dass** die Paketteileinheit (7) und/oder die Zusammenbaueinheit (12) und/oder die Sicherheitseinheit (8) ausgebildet und/oder eingerichtet ist, um die Kontrolldaten (14) auszuwerten, um gemäß diesen konfiguriert zu werden.

9. Sicherheitseinrichtung (2, 3) nach einem der vorhergehenden Ansprüche, **dadurch gekennzeichnet, dass** die Kontrolldaten (14) für wenigstens eine Schicht (L2, L3) Informationen zur Berechnung einer Offsetadresse einer Payload eines Datenpaketes (1) und/oder Daten zur Erzeugung eines Headers, insbesondere eines ESP Headers (ESP HDR) und/oder Steuerungsdaten zur Schaltung von Datenpfaden in der jeweiligen Einheit (7, 8, 12), insbesondere Multiplexeradressen, und/oder Daten betreffend eine Schlüsselauswahl umfassen.

10. Sicherheitseinrichtung (2, 3) nach einem der vorhergehenden Ansprüche, **dadurch gekennzeichnet, dass** die Kontrolldaten (14) für die jeweilige Schicht (L2, L3) derart sind, dass durch diese die Paketteileinheit (7), die Zusammenbaueinheit (12) und insbesondere die Sicherheitseinheit (8) derart konfiguriert werden kann oder konfiguriert wird, dass eine an die jeweilige Schicht (L2, L3) angepasste Verarbeitung des Datenpaketes (1) oder Teilen (9, 10, 13) dieses durch die jeweilige Einheit (7, 8, 12) möglich wird.

11. Sicherheitseinrichtung (2, 3) nach einem der vorhergehenden Ansprüche, **dadurch gekennzeichnet, dass** die Kontrolldaten (14) für eine (L2) der wenigstens zwei Schichten (L2, L3) derart sind, dass sie die Paketteileinheit (7) dazu veranlassen, der Sicherheitseinheit (8) einen Nutzdatenteil mit einer davorstehenden Typenangabe (ET) als Klartext zu übergeben und die Kontrolldaten (14) für eine weitere (L3) der wenigstens zwei Schichten (L2, L3) derart sind, dass sie die Paketteileinheit (7) dazu veranlassen, der Sicherheitseinheit (8) einen Nutzdatenteil ohne eine davorstehende Typenangabe (ET) als Klartext zu übergeben.

12. Sicherheitseinrichtung (2, 3) nach einem der vorhergehenden Ansprüche, **dadurch gekennzeichnet, dass** die Kontrolldaten (14) für eine (L3) der wenigstens zwei Schichten (L2, L3) derart sind, dass sie die Paketteileinheit (7) und/oder die Sicherheitseinheit (8) dazu veranlassen, einem Datenpaketteil einen Header (ESPH) und einen Tail (ESPT)insbesondere als zusätzliche Authentifizierungsdaten (AAD) voranzustellen, und die Kontrolldaten (14) für eine weitere (L2) der wenigstens zwei Schichten (L2, L3) derart sind, dass sie die Paketteileinheit (7) und/oder die Sicherheitseinheit (8) dazu veranlassen, einem Datenpaketteil insbesondere nur einen Header (ESP HDR) bevorzugt als zusätzliche Authentifizierungsdaten (AAD) voranzustellen.

13. Sicherheitseinrichtung (2, 3) nach einem der vorhergehenden Ansprüche, **dadurch gekennzeichnet, dass** die Konfigurationseinheit (11) einen Konfigurationsspeicher (15), in dem die Kontrolldaten (14) abgelegt sind, umfasst oder durch einen solchen gebildet wird oder mit einem solchen verbunden ist, wobei der Konfigurationsspeicher (15) bevorzugt einen inhaltsadressierbaren Speicher umfasst oder durch einen solchen gebildet wird.

14. Sicherheitseinrichtung (2, 3) nach einem der vorhergehenden Ansprüche, **dadurch gekennzeichnet, dass** die Konfigurationseinheit (11) wenigstens einen inhaltsadressierbaren Speicher, insbesondere einen ternär inhaltsadressierbaren Speicher umfasst.

15. Sicherheitseinrichtung (2, 3) nach einem der vorhergehenden Ansprüche, **dadurch gekennzeichnet, dass** die Sicherheitseinheit (8) zumindest einen Teil eines FPGAs (4) umfasst oder durch zumindest einen Teil eines FPGAs (4) gebildet wird.

16. Sicherheitsvorrichtung zum Erhalt eines kryptographischen Schutzes für Datenpakete (1) verschiedener Schichten (L2, L3) und zum Prüfen eines kryptographischen Schutzes von Datenpaketen (1) verschiedener Schichten (L2, L3), umfassend zwei Sicherheitseinrichtungen (2, 3) nach einem der vorhergehenden Ansprüche, wobei eine Sicherheitseinrichtung (2) zum Erhalt eines kryptographischen Schutzes für Datenpakete (1) und die andere (3) zum Prüfen eines kryptographischen Schutzes von Datenpaketen (1) ausgebildet und/oder eingerichtet ist.

17. Verfahren zum Erhalt eines kryptographischen Schutzes für Datenpakete (1) verschiedener Schichten (L2, L3) und/oder zum Prüfen eines kryptographischen Schutzes von Datenpaketen (1) verschiedener Schichten (L2, L3), bei dem
- ein Datenpaket (1), das einer von wenigstens zwei möglichen Schichten (L2, L3) zugeordnet ist, empfangen wird (S1),
- anhand des Datenpaketes (1) bestimmt wird, welcher Schicht (L2, L3) dieses zugeordnet ist (S2), und/oder insbesondere vor Empfang des Datenpaketes (1) die Eigenschaften der Verbindungsstrecke, über welches das Datenpaket (1) empfangen wird, untersucht werden und anhand des Ergebnisses der Untersuchung bestimmt wird, welcher Schicht (L2, L3) über die Verbindungsstrecke ankommende Datenpakete (1) zugeordnet sind,
- Kontrolldaten (14) für jede der wenigstens zwei Schichten (L2, L3) bereitgestellt und aus diesen die zu der Schicht des Datenpaketes und/oder der Schicht (L2, L3) der Verbindungsstrecke gehörigen Kontrolldaten (14) ausgesucht werden (S3),
- die ausgesuchten Kontrolldaten (14) oder jeweils Teile dieser an eine Paketteileinheit (7) und eine Zusammenbaueinheit (12) und insbesondere eine Sicherheitseinheit (8) übermittelt (S4) und die Paketteileinheit (7) und die Zusammenbaueinheit (12) und insbesondere die Sicherheitseinheit (8) gemäß den Kontrolldaten (14) konfiguriert werden (S5),
- das empfangene Datenpaket (1) an die Paketteileinheit (7) übergeben (S6) und von dieser in zwei oder mehr Teile (9, 10, 13) aufgeteilt wird, wobei die Aufteilung gemäß der über die Kontrolldaten (14) erhaltenen Konfiguration erfolgt (S7),
- von der Paketteileinheit (7) wenigstens ein Paketteil an die Sicherheitseinheit (8) und wenigstens ein Paketteil an die Zusammenbaueinheit (12) übergeben wird (S8),
- die Sicherheitseinheit (8) den wenigstens einen von der Paketteileieinheit (7) erhaltenen Paketteil (9, 10) mit einem kryptographischen Schutz versieht oder einen solchen prüft (S9), und den wenigstens einen Paketteil (9, 10) anschließend an die Zusammenbaueinheit (12) übergibt,
- die Zusammenbaueinheit (12) den wenigstens einen von der Paketteileinheit (7) erhaltenen Datenpaketteil (13) und den wenigstens einen von der Sicherheitseinheit (8) erhaltenen Datenpaketteil (9, 10) zu einem Datenpaket (1) zusammensetzt, wobei das Zusammensetzen gemäß der über die Kontrolldaten (14) erhaltenen Konfiguration erfolgt (S10) .

18. Verfahren nach Anspruch 17, **dadurch gekennzeichnet, dass** vor Empfang des Datenpaketes (1) die Eigenschaften der Verbindungsstrecke, über welches das Datenpaket (1) empfangen wird, untersucht werden, indem wenigstens ein Datenpaket, das einer vorgegeben Schicht (L2, L3) zugeordnet ist, an eine vorgegebene Adresse gesendet und überwacht wird, ob ein charakteristisches Antwortpaket empfangen wird.

19. Computerprogramm umfassend Programmcode-Mittel zur Durchführung des Verfahrens nach einem der Ansprüche 17 oder 18.

20. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 17 oder 18 durchzuführen.
